# EUROPÄISCHE PATENTANMELDUNG

(11) **EP 3 106 028 A1**
(43) Veröffentlichungstag der Anmeldung: **21.12.2016**
(21) Anmeldenummer: 16174599.7
(22) Anmeldetag: 15.06.2016
(51) Int. Cl.: A01K 31/14

(54) **VOGELHAUS**

(30) Priorität: 16.06.2015 DE 202015103168 U; 10.07.2015 DE 202015103629 U
(71) Anmelder: Fuchs, Alfred, 78467 Konstanz (DE)
(72) Erfinder: Fuchs, Alfred, 78467 Konstanz (DE)
(74) Vertreter: Wagner, Kilian

(57) **Zusammenfassung**

Die Erfindung betrifft ein Vogelhaus (1) mit einer einen Innenraum (3) begrenzenden, vorzugsweise aus einem regenwasserdichten und witterungsbeständigen Material ausgebildeten, Umfangswand (2), mit einem den Innenraum (3) auf einer Oberseite regenwasserdicht verschließenden Dach (4) und mit einem den Innenraum (3) mit der Umgebung verbindenden Flugloch (9) für Vögel, wobei in dem Innenraum (3), zumindest abschnittsweise, eine entnehmbare Brutmulde (13) aufgenommen ist, wobei unterhalb des Daches (4), beabstandet entlang einer, insbesondere vertikalen, Längsachse (L) eine von der Umfangswand (2) begrenzte Einführund Entnahmeöffnung (12) für die Brutmulde (13) angeordnet ist, durch die Brutmulde (13) entlang der Längsachse (L) nach unten entnehmbar ist, und dass zwischen einer Verriegelungsstellung und einer Freigabestellung verstellbare Verriegelungsmittel und/oder Klemmmittel vorgesehen sind, um die Brutmulde (13) in einer Fixierposition ortsfest relativ zu der Umfangswand (2) zu fixieren.

## Beschreibung

Die Erfindung betrifft ein Vogelhaus (Vogelnistkasten) gemäß dem Oberbegriff des Anspruchs 1 mit einer einen Innenraum begrenzenden, vorzugsweise aus einem regenwasserdichten und witterungsbeständigen Material ausgebildeten, ganz besonders bevorzugt kreiszylindrischen, Umfangswand, mit einem den Innenraum auf einer Oberseite regenwasserdicht verschließenden (abdeckenden) Dach und mit einem den Innenraum mit der Umgebung verbindenden Flugloch (Eingangsöffnung) für Vögel, wobei in dem Innenraum, zumindest abschnittsweise, eine entnehmbare Brutmulde (bevorzugt wannenförmiges Brutmuldenelement) aufgenommen ist.

Bekannte Vogelhäuser, die meist aus Holz gefertigt sind, haben das Problem, dass diese zumindest über die Zeit nicht regendicht bleiben. Witterungsbedingt bilden sich in dem arbeitenden Holz Spalte und Risse, durch die Regen bzw. Feuchtigkeit eindringen kann. Dies führt insbesondere bei einer kalten Witterung dazu, dass das von den Vögeln in dem Vogelhaus gebaute Nest durchfeuchtet wird und die frisch geschlüpften Vögel unterkühlen und sterben. Dieses Problem wird bei herkömmlichen Vogelhäusern dadurch verstärkt, dass das Vogelnest von den Vögeln unmittelbar an dem den Vogelhausinnenraum begrenzenden Boden gebaut wird, auf dem sich zusätzlich zu der von außen eintretenden Feuchtigkeit das an der Innenumfangswand bildende Kondensat sammelt und somit zusätzlich das Nest durchfeuchtet.

Ein gegenüber herkömmlichen Vogelhäusern verbessertes Vogelhaus ist in der DE 36 32 887 A1 beschrieben worden. Aus der Druckschrift ist ein Vogelhaus (Vogelnistkasten) bekannt, das über einen herausnehmbaren Nisteinsatz (Brutmulde) verfügt, der mit Radialabstand zur den Innenraum begrenzenden Umfangswand angeordnet ist und auf einem den Innenraum ebenfalls begrenzenden Boden aufsteht. Zum Entnehmen der Brutmulde muss zunächst das Vogelhausdach entfernt werden und die Brutmulde dann nach oben herausgenommen werden. Dies ist jedoch bei den häufig zum Schutz vor Raubtieren hoch aufgehängten Vogelkästen nur schwer und mittels des Einsatzes von hohen und unfallträchtigen Leitern möglich.

Ein ähnlich aufgebautes Vogelhaus in den DE 71 045 34 U beschrieben-auch hier muss die Brutmulde aufwendig nach oben entnommen werden.

Ausgehend von dem vorgenannten Stand der Technik liegt der Erfindung die Aufgabe zugrunde ein verbessertes, möglichst regenwasserdichtes Vogelhaus anzugeben, das ein Überleben von Jungvögeln sicherstellt und darüber hinaus komfortabel durch den Besitzer zu handhaben ist.

Diese Aufgabe wird mit einem Vogelhaus mit den Merkmalen des Anspruchs 1 gelöst, d.h. bei einem gattungsgemäßen Vogelhaus dadurch, dass unterhalb des Daches, beabstandet entlang einer, insbesondere vertikalen, Längsachse des Vogelhauses eine von dem Umfangswand begrenzte Einführ- und Entnahmeöffnung für die Brutmulde angeordnet ist, durch die die Brutmulde entlang der Längsachse nach unten entnehmbar und in die entgegengesetzte Richtung nach oben einführbar ist, und dass zwischen einer Verriegelungsstellung und einer Freigabestellung verstellbare Verriegelungsmittel und/oder Klemmmittel vorgesehen sind, um die Brutmulde in einer Fixierposition ortsfest relativ zu der Umfangswand zu fixieren.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde in einem Vogelhaus, welches ein einen von einer Umfangswand außen begrenzten Innenraum regenwasserdicht verschließendes Dach aufweist eine entnehmbare Brutmulde anzuordnen, wobei eine Einführ- und Entnahmeöffnung für die Brutmulde nicht wie im Stand der Technik in einem oberen Bereich des Innenraums angeordnet ist, sondern in einem unteren Bereich, also derart, dass die Brutmulde entlang einer sich vom Dach nach unten, insbesondere vertikal nach unten, erstreckenden Längsachse nach unten entnommen und in die entgegengesetzte Richtung nach oben wieder in die Einführ- und Entnahmeöffnung eingeführt werden kann. Hierdurch wird die Handhabung des bevorzugt, ggf. bis auf das Flugloch regenwasserdichten Vogelhauses wesentlich erleichtert. Insbesondere ist es bei geeigneter Montage des Vogelhauses möglich, die Brutmulde ohne weitere Hilfsmittel, wie einer Leiter nach unten zu entnehmen bzw. nach oben wieder einzuführen, insbesondere im Rahmen einer ausschließlich geradlinigen, vertikalen Bewegung.

Ganz besonders bevorzugt ist es, wenn die Brutmulde den Innenraum nach unten abschließt, d.h. wenn unterhalb der Brutmulde kein flächiger Boden vorgesehen ist, auf welchem sich Kondensat oder Kot sammeln könnte.

Das nach dem Konzept der Erfindung ausgebildete Vogelhaus weist gegenüber bekannten Vogelhäusern erhebliche Vorteile auf, insbesondere dann, wenn in Weiterbildung der Erfindung die Umfangwand und ein Dachelement des Daches nicht wie im Stand der Technik aus einem zumindest mit der Zeit nicht regenwasserdichten Material ausgebildet sind, sondern aus einem dauerhaft regenwasserdichten und witterungsbeständigen Material, wie Kunststoff oder Metall, beispielsweise Aluminium oder einem verzinkten Blech.

Ganz besonders bevorzugt ist eine Ausführungsform, bei der das Dachelement und die Umfangswand einteilig, insbesondere im Kunststoffspritzgussverfahren ausgebildet sind, da hier jegliche Übergangsspalte sicher vermieden werden. So besteht ein wesentlicher Vorteil des erfindungsgemäßen Vogelhauses darin, dass mit der nach unten entnehmbaren Brutmulde, die bevorzugt keinen großflächigen Kontakt zur Umfangswand aufweist, um somit einen Flüssigkeitsübertritt und insbesondere auch einen Wärme- bzw. Kälteübergang so gering wie möglich zu gestalten, eine warme und trockene Brut sichergestellt wird. Bevorzugt ist hierzu radial zwischen der Brutmulde und der Umfangswand ein axial geradlinig durchgehender und, d.h. in direkter Linie nach unten offener Spalt vorgesehen, der ggf. durch in Umfangsrichtung beabstandete, im Wesentlichen punktuelle Anlagebereiche geringfügig unterbrochen sein kann. Dieser Spalt hat zum einen den Vorteil der Abfuhr von möglichem sich an der Umfangwand innen bildenden Kondensat nach unten und dient darüber hinaus als Belüftungsschlitz, um an heißen Tagen durch die natürliche Konvektion durch den Spalt hin zum Flugloch und durch dieses hindurch für ein optimales Klima für die junge Brut Sorge zu tragen.

Im Rahmen einer später noch zu erläuternden, alternativen Ausführungsform umfasst das Dach nicht ein wie zuvor beschrieben ausgestaltetes unmittelbar an die Umfangswand angrenzendes und/oder einteilig mit dieser ausgebildetes Dachelement, sondern das Dach wird gebildet von einem verstellbaren, insbesondere verschwenkbaren (rotierbaren) Abdeckschirm, der bevorzugt in einer Grundstellung die Umfangswand in radialer Richtung nach außen, insbesondere allseitig, überragt, und der aus dieser Grundstellung herausverstellbar, insbesondere herausverschwenkbar ist, um die von dem Abdeckschirm in der Grundstellung nach oben verdeckten Innenraum hineinsehen zu können. Bevorzugt ist auch der Abdeckschirm aus einem beständigen, dauerhaft regendichten Material, insbesondere Kunststoff oder Metall, ausgebildet. Ganz besonders bevorzugt ist eine Ausführungsform, bei der der Abdeckschirm neben einer sich senkrecht zur Längsachse erstreckenden Flächenerstreckung einen davon abkragenden Umfangsrand aufweist, der nach unten ragt, vorzugsweise axial nach unten über einen oberen Umfangswandrand hinaus, um somit eine optimierte Regendichtheit zu gewährleisten. Besonders zweckmäßig ist es nun, wenn der Abdeckschirm um zwei winklig zueinander angeordnete Achsen rotierbar angeordnet ist, nämlich eine Kippachse, die bevorzugt senkrecht zur Längsachse des Vogelhauses verläuft und um die der Abdeckschirm, vorzugsweise zusammen mit seiner Rotationsachse verkippbar ist, um den Abdeckschirm aus dieser verkippten Position heraus dann um die durch das Verkippen nicht mehr parallel zur Längsachse angeordnete Rotationsachse rotiert werden zu können. Eine solche Anordnung ist sinnvoll, um einen Umfangsrand mit in der Grundstellung möglichst langer Axialerstreckung nach unten realisieren und den Abdeckschirm trotzdem aus der Grundstellung heraus verschwenken zu können. Die Realisierung eines verstellbaren Abdeckschirms macht es möglich, auf ein zusätzliches Dachelement, welches, wie später noch erläutert werden wird, bevorzugt abschnittweise lichtdurchlässig, insbesondere durchsichtig ist, verzichten zu können, ohne dass hieraus Nachteile resultieren. Im Gegenteil ist eine solche Ausführungsform von besonderem Vorteil, da der Abdeckschirm in der Grundstellung bevorzugt mit Axialabstand zum oberen Umfangswandrand angeordnet ist und somit eine noch bessere Luftkonvektion resultiert, die das Nest trocken und bei hohen Temperaturen vergleichsweise kühl hält.

Bevorzugt beträgt die Radialerstreckung des sich um die Brutmulde herum erstreckenden Spaltes, also der Abstand zwischen Brutmulde und der Umfangswand zwischen 1 mm und 5mm, vorzugsweise zwischen 1 mm und 2mm, so dass ein Abfließen von Kondensat als auch von Vogelkot gewährleistet und die vorerwähnte gute Luftzirkulation sichergestellt ist.

Bevorzugt ist der Spalt, wie erwähnt, in gerader Linie nach unten offen, d.h. das Kondensat und/oder der Kot können in direkter Linie nach unten abtropfen und gelangen somit nicht auf einem vorzugsweise nicht vorhandenen Innenraumboden unterhalb der Brutmulde.

Da die Brutmulde nach unten entnehmbar ist, wozu es notwendig ist, die Einführ- und Entnahmeöffnung in einem unteren Bereich des Innenraums anzuordnen, ist es nicht möglich, die Brutmulde auf einem Vogelhausboden abzustellen - vielmehr ist es zur Gewährleistung eines sicheren Haltes bzw. einer sicheren Positionierung der Brutmulde in dem Innenraum von Vorteil der Brutmulde Verriegelungs- und/oder Klemmmittel zuzuordnen, mit denen die Brutmulde in der eingeführten Situation relativ zu der Umfangswand fest positionierbar ist. Hierzu ist es beispielsweise, wie später noch erläutert werden wird, möglich, an der Umfangswand und/oder der Brutmulde angeordnete, insbesondere in radialer Richtung federnde Rastmittel vorzusehen, die mit entsprechenden Vorsprüngen oder Ausnehmungen in dem jeweils gegenüberliegenden Bauteil formschlüssig zusammenwirken können. Auch ist es denkbar reine Klemmmittel vorzusehen, die beim Einschieben der Brutmulde von unten in die Einführ- und Entnahmeöffnung komprimiert werden und sich dann, insbesondere punktuell an mehreren in Umfangsrichtung beabstandeten Positionen an der Umfangswand oder der Brutmulde (abhängig von der Positionierung) von innen her abstützen. Auch ist es denkbar, als Verriegelungsmittel mindestens einen Stab vorzusehen, der beispielsweise durch zwei einander gegenüberliegende Öffnungen der Umfangswand, bevorzugt senkrecht zur Längsachse des Vogelhauses führbar ist, wobei sich die Brutmulde dann von oben axial auf dem Stab abstützen kann. Zum Entnehmen der Brutmulde muss dann zunächst der Stab entfernt werden, um die Einführ- und Entnahmeöffnung vollständig freizugeben.

Anstelle eines translatorisch verstellbaren Riegels in Form des vorerwähnten Stabes ist auch eine verschwenkbare Lösung denkbar, wobei hierzu ein oder mehrere Riegel in einem unteren Bereich der Umfangswand um jeweils eine Schwenkachse verschwenkbar angeordnet sein können und somit in einen Bereich unterhalb der Brutmulde verdrehbar sind.

Das nach dem Konzept der Erfindung ausgebildete Vogelhaus (Nistkasten) ist einfach montierbar, so dass der Montagebereich durch Kinder möglich ist. Darüber hinaus ist das neue Vogelhaus kostengünstig herstellbar. Bevorzugt weist das Vogelhaus eine helle, sonnenabstrahlende Oberfläche auf, um das Wohlbefinden der Jungvögel zu steigern, auch für den Fall, dass das Vogelhaus fälschlicherweise an einem Platz mit zuviel Sonne angebracht worden ist. Der Nistkasten sollte maximal zwei Stunden Morgensonne bekommen und ansonsten in einem schattigen Bereich angeordnet sein.

Insbesondere dann, wenn das Dach und die Umfangswand als separate oder bevorzugt einteiliges Spritzgussteil/e ausgebildet werden ist eine kostengünstige Herstellung sichergestellt. Besonders bevorzugt ist es, wenn die Umfangswand von einem Rohrelement gebildet ist, an dem das Dach, insbesondere ein verschwenkbar angeordneter Abdeckschirm festgelegt ist. Diese Ausführungsform ermöglicht es grundsätzlich die Umfangswand aus auf dem Markt erhältlichen, handelsüblichen, kostengünstig erwerbbaren Rohrelementen, beispielsweise aus Kunststoff herzustellen. Dabei ist es möglich, Rohrelemente, beispielsweise Abwasserrohre aus Kunststoff oder Metall, insbesondere einer Leichtmetalllegierung, wie Aluminium einzusetzen. Bevorzugt ist die Außenumfangswand, wie später noch erläutert werden wird zum Schutz gegen Raubtiere glatt. Im Hinblick auf die Ausgestaltung des Rohrquerschnitts gibt es unterschiedliche Möglichkeiten. So ist es denkbar Rohre mit kreiszylindrischem Querschnitt einzusetzen oder alternativ auch mehrkantrohre, insbesondere Rechteck- oder Quadratrohre, vorzugsweise jedoch nicht beschränkt hierauf bei einer Ausbildung des Rohres bzw. der Umfangswand aus Metall, beispielsweise aus Aluminium.

Als besonders vorteilhaft hat es sich herausgestellt, wenn im Fall des Vorsehens eines, bevorzugt unmittelbar an die Umfangswand angrenzenden oder einteilig mit dieser ausgebildeten, bevorzugt nicht verstellbaren Dachelementes, dieses zumindest abschnittsweise lichtdurchlässig, insbesondere durchsichtig ist. Hierzu kann das Dachelement, zumindest abschnittsweise und vollständig aus Acrylglas oder Glas ausgebildet sein. Ganz besonders bevorzugt ist es, wenn das Dach eine oder mehrere integrierte Klarsichtflächen aufweist, die bevorzugt im Rahmen der bevorzugten Herstellung der Umfangswand und des Dachelementes als einteiliges Kunststoffspritzgussteil realisiert werden. Durch das zumindest abschnittsweise durchsichtige Dach hindurch kann der Nestinhalt nahezu störungsfrei beobachtet werden. Auch eignet sich aufgrund des Vorsehens eines zumindest abschnittsweise durchsichtigen Daches das Vogelhaus auch für Halbnischenbrüter wie für den Gartenrotschwanz oder wie Nischenbrüter wie den Hausrotschwanz, die Bruthöhlen mit Lichteintrag bevorzugen.

Besonders zweckmäßig ist es, wenn, wie eingangs erwähnt, ein verstellbarer, insbesondere rotierbarer, ganz besonders bevorzugt exzentrisch verschwenkbarer Abdeckschirm angeordnet ist. Dieser kann relativ zu einem oberen Umfangswandrand und, falls vorgesehen zu einem unterhalb des Abdeckschirms vorgesehenen Dachelement verstellt werden, was insbesondere dann vorteilhaft ist, wenn das Dachelement zumindest abschnittsweise lichtdurchlässig, insbesondere durchsichtig ist oder wenn auf ein geschlossenes Dachelement verzichtet wird. So kann durch die Verstellbewegung zum einen der Lichteinfall reguliert werden - insbesondere ist auch eine deutliche Abdunklung des Innenraums möglich, was insbesondere vorteilhaft für Höhlenbrüter wie Spatzen, Meisen oder Kleiber ist. Anders ausgedrückt, wird durch die Abdeckung die eindringende Lichtmenge verändert werden, um im Laufe der Zeit sämtliche Vögel, auch Höhlenbrüter, Halbhöhlenbrüter oder Nischenbrüter oder aber auch Buschbrüter für die Nutzung des Vogelhauses (Nistkastens) gewinnen zu können. Auch ist es möglich, die Abdeckung zum zeitweisen Beobachten des Nestinhaltes weg zu verstellen und nach erfolgter Beobachtung den Freiraum bzw. Durchgriff oder im Falle des Vorsehen eines Dachelementes dessen lichtdurchlässigen oder durchsichtigen Bereich wieder zumindest abschnittsweise, vorzugsweise vollständig zu überdecken. Als besonders vorteilhaft hat es sich herausgestellt, wenn der Abdeckschirm derart ausgestaltet ist, dass dieser in zumindest einer Stellung den von einem oberen Umfangswandrand umschlossenen Bereich vollständig abdeckt und die Umfangswand in radialer Richtung, bevorzugt allseitig überragt, um zu gewährleisten, dass auf die Abdeckung auftreffender Regen mit Radialabstand zur Umfangswand direkt nach unten abtropfen kann, ohne außen über die Umfangwand nach unten abzulaufen.

Dabei ist es besonders bevorzugt, wenn der Abdeckschirm, insbesondere radial außen einen umlaufenden, nach unten weisenden Kragen aufweist, der noch weiter bevorzugt im geschlossenen Zustand, bei dem der Abdeckschirm die obere Öffnung oder ein fakultatives, insbesondere lichtdurchlässiges, Dachelement vollständig abdeckt, den oberen Umfangswandrand nach unten, d. h. axial entlang der Längserstreckung des Vogelhauses überragt, also einen zwischen dem Abdeckschirm und dem oberen Umfangswandrand vorgesehenen Spalt außen axial in Umfangsrichtung verdeckt, um, insbesondere bei einer solchen Ausführungsform mit seitlichem Kragen, aber auch unabhängig davon, ein Rotieren bzw. Verschwenken des Abdeckschirms um seine Schwenkachse, bevorzugt relativ zu einem dem Abdeckschirm haltenden Winkelelement, zu ermöglichen ist es bevorzugt, wenn der Abdeckschirm nicht nur um die Schwenkachse rotierbar, sondern auch um eine senkrecht hierzu verlaufende Kippachse verkippbar ist. Die Kippachse verläuft dabei bevorzugt senkrecht zur Hochrichtung bzw. Längserstreckung des Vogelhauses, wobei die Kippachse und die Schwenkachse relativ fest zueinander positioniert sind, um die Schwenkachse durch Verkippen um die Kippachse (zusammen mit dem Abdeckschirm) verkippen zu können. Hierdurch ist es möglich, trotz Vorsehens des vorerwähnten, in axialer Richtung orientierten Kragens, der ggf. den oberen Umfangswandrand nach unten überragt, den Abdeckschirm nach einem vorherigen Verkippen um die Kippachse um die dann mitverkippte Schwenkachse verschwenken und dadurch eine obere Öffnung oder das fakultative geschlossene Dachelement freigeben zu können. Eine besonders einfache und kostengünstige Realisierung der Kipp- und der Schwenkachse besteht darin, ein Winkelelement zum Festlegen des Abdeckschirms an der Umfangswand vorzusehen, wobei diese zwei, insbesondere rechtwinklig zueinander angeordnete Laschen aufweist, die jeweils senkrecht von einer Achse, nämlich zum einen der Kippachse und zum anderen der Schwenkachse durchsetzt sind. Die Achsen können dann beispielsweise von entsprechenden Befestigungsschrauben gebildet werden, mit denen das Winkelelement einerseits mit einer Lasche am Abdeckschirm und andererseits mit der anderen Lasche an der Umfangswand festgelegt ist.

Alternativ zu einer verdrehbaren Anordnung des Abdeckschirms ist auch beispielsweise eine verschiebbare Anordnung denkbar.

Wie eingangs bereits angedeutet, bringt bereits eine Ausführungsform mit einem zumindest abschnittsweise lichtdurchlässigen, bevorzugt durchsichtigen, noch weiter bevorzugt unmittelbar an die Umfangswand angrenzenden Dachelement und noch weiter bevorzugt einteilig mit diesem ausgebildeten Dachelement erhebliche Vorteile gegenüber bekannten Nistkästen. Um einen möglichst einfachen konstruktiven Aufbau zu gewährleisten und darüber hinaus zusätzliche Vorteile zu erreichen, ist in Weiterbildung der Erfindung jedoch vorgesehen, auf ein geschlossenes Dachelement unterhalb des Abdeckschirms zu verzichten und somit den Innenraum nach oben unmittelbar mit dem verstellbaren, insbesondere verschwenkbaren Abdeckschirm zu begrenzen, welcher ganz besonders bevorzugt in axialer Richtung von einem oberen Umfangswandrand beabstandet angeordnet ist, um somit die Konvektion durch den Innenraum weiter zu verbessern. Insbesondere dann, wenn der Abdeckschirm den oberen Umfangswandrand in radialer Richtung mit einem nach axial unten abkragenden Umfangsrand übergreift, ist es bevorzugt, zusätzlich zu einer Verstellachse, insbesondere einer Verschwenkachse zum Verstellen, insbesondere Verschwenken des Abdeckschirms eine Kippachse vorzusehen, um die der Abdeckschirm vor dem Verstellen, insbesondere Verschwenken, bzw. Rotieren verkippbar ist, um somit den abkragenden Umfangsrand aus der Umfangswandrandebene herauszuverstellen und somit ein Verschwenken trotz Umfangsrand um die Rotationsachse zu ermöglichen. Eine alternative Ausgestaltungsform sieht vor zusätzlich zu einer Rotationsachse zum Rotieren des Abdeckschirms eine axiale Verstellachse vorzusehen, beispielsweise durch die Realisierung eines Langlochs, so dass vor dem Verschwenken des Abdeckschirms dieser axial relativ zu dem oberen Umfangswandrand verstellt werden kann, bis auf eine Höhe, bei der sich der nach unten abkragende Umfangskragen nicht mehr seitlich benachbart zu der Umfangswand befindet, woraufhin dann der Abdeckschirm um die Rotationsachse verschwenkt werden kann. Beide Ausführungsformen sind realisierbar. Insbesondere dann, wenn auf ein Dachelement unterhalb des Abdeckschirms verzichtet wird, kann durch Verstellen, insbesondere Verschwenken des Abdeckschirms, unmittelbar in das Nest, d.h. den Innenraum hineingesehen werden, ohne dass es eines durchsichtigen Dachelementes bedarf.

Bei Bedarf kann der Abdeckschirm derart ausgestaltet werden, dass die Abdeckung mindestens eine seitliche, zumindest bis auf Höhe des vorzugsweise in der Umfangswand angeordneten Flugloches reichende Seitenbacke, vorzugsweise zwei in Umfangsrichtung beabstandete Seitenbacken aufweist, um das Flugloch rechts und/oder links zu schützen. Zusätzlich oder alternativ kann der Abdeckschirm auch mit einer Fluglochabdeckfläche versehen sein, die mit Radialabstand an dem Flugloch vorbei drehbar ist, um dieses aus einer Richtung von radial außen zu schützen, wobei diese Fluglochabdeckung so dimensioniert bzw. positioniert ist, dass die Singvögel weiterhin das Flugloch erreichen können, größere Raubvögel und/oder sonstige Raubtiere jedoch Schwierigkeiten haben das Flugloch zu erreichen.

Zusätzlich oder alternativ zu einer zumindest abschnittsweise lichtdurchlässigen, insbesondere durchsichtigen Ausgestaltung eines Dachelementes ist es möglich, zumindest abschnittsweise die Umfangswand lichtdurchlässig und/oder durchsichtig auszugestalten. Bevorzugt weist die Umfangswand mindestens ein Sichtfenster auf, es ist jedoch auch eine (bis auf das Flugloch - im Wesentlichen vollständig lichtdichte Ausbildung der Umfangswand möglich.

Als besonders vorteilhaft hat es sich herausgestellt, wenn in dem Innenraum und/oder auf der Außenseite der Umfangswand, insbesondere unterhalb und/oder seitlich neben dem Flugloch ein Aufsitzstab für Vögel angeordnet ist, ganz besonders bevorzugt in der Form eines die Umfangswand radial durchsetzenden Stabes. Aus dem Stand der Technik sind Aufsitzstäbe lediglich auf der Außenseite des Vogelhauses bekannt-der Anmelder hat jedoch herausgefunden, dass es besonders bevorzugt ist, wenn, insbesondere auch, auf der Innenseite, d.h. in dem Innenraum benachbart zu dem Flugloch ein Aufsitzstab für Vögel angeordnet ist, da dieser den Vögeln ermöglicht, von innen heraus die Umgebung zu beobachten, bevor diese das Vogelhaus durch das vorzugsweise in der Umfangwand vorgesehene Flugloch verlassen.

Gleichzeitig dient ein außen und/oder innen angeordneter Aufsitzstab als Ausflughilfe für die Jungvögel. Eine konstruktiv einfache Möglichkeit zur Realisierung eines innen und außen angeordneten Aufsitzstabes besteht darin, einen eine Durchgangsöffnung in der Umfangswand durchsetzenden Stab vorzusehen, der mit seinem äußeren Teil den äußeren Aufsitzstab und mit seinem inneren Teil den inneren Aufsitzstab bildet.

Besonders bevorzugt ist eine Ausführungsform des Vogelhauses, bei der die Außenoberfläche der, insbesondere kreiszylindrischen Umfangswand zum Erschweren eines Festhaltens von Raubwild glatt ist und insbesondere keine Poren aufweist. Insbesondere dann, wenn auf den Einsatz von Holz, insbesondere von unbehandeltem bzw. unbeschichtetem Holz für das Umfangswandmaterial verzichtet wird sondern die Umfangswand stattdessen aus einem Kunststoff- und/oder Metallmaterial gebildet ist, können sich mangels Vorsprüngen, Poren und Rissen keine Parasiten einnisten und überwintern.

Im Hinblick auf die konkrete Ausgestaltung der Verriegelungs- und/oder Klemmmittel gibt es unterschiedliche Möglichkeiten. So ist es beispielsweise denkbar, mindestens zwei, vorzugsweise drei in Umfangsrichtung beabstandete Rastzungen an der Brutmulde vorzusehen, die mit entsprechenden Vorsprüngen oder Ausnehmungen im Bereich der Umfangswand zusammenwirken und in radialer Richtung nach außen zum Arretieren einschnappen können. Bevorzugt sind entsprechende Federzungen dann nach schräg oben geneigt, um ein erleichtertes Herausziehen nach unten zu ermöglichen und um einen Widerhakeneffekt zu vermeiden. Auch ist es möglich, zwei oder bevorzugt drei in Umfangsrichtung beabstandete Elastomerelemente vorzusehen, die in einen Bereich zwischen der eigentlichen Brutmulde und der Umfangwand geklemmt werden können. Zusätzlich oder alternativ ist es denkbar, mindestens eine, vorzugsweise mehrere in Umfangsrichtung beabstandete federnde Laschen am Innenumfang der Umfangswand vorzusehen, die mit entsprechenden Vorsprüngen oder Ausnehmungen in der Brutmulde zusammenwirken können. Auch können die Klemmmittel an der Umfangswand angeordnet werden.

Bevorzugt ist die Brutmulde nestförmig ausgestaltet, d.h. als flache Wanne, wodurch die Vögel weniger Nistmaterial benötigen. Besonders bevorzugt ist es, wenn die Brutmulde am Außenumfang sich nach unten verjüngt, vorzugsweise leicht konisch ausgebildet ist, so dass evtl. Kondenswasser oder Flüssigkot an der Außenhülle immer abfließen kann und nahezu kein Wärmeübergang zur Umfangswand abfließen kann, so dass das Nest immer warm und trocken bleibt.

Ganz besonders bevorzugt ist es, wenn die Brutmulde eine raue Oberfläche aufweist und/oder nach innen in die Mulde ragende Vorsprünge aufweist, die ein Verdrehen von Nistmaterial innerhalb der Mulde in Umfangsrichtung zumindest weitgehend verhindern. Liegt nämlich das Nistmaterial zu locker in einer beispielsweise aus Kunststoffmaterial hergestellten Brutmulde besteht die Gefahr, dass die Vögel den Nestbau abbrechen.

Ganz besonders bevorzugt ist eine Ausführungsform, bei der das Vogelhaus Befestigungsmittel zum Fixieren an einer Wand oder einem Baum oder einem Pfahl aufweist und die Umfangswand relativ zu den Befestigungsmitteln verdrehbar angeordnet sind, um das Flugloch relativ zur Wetterseite ausrichten zu können, so dass das Flugloch bevorzugt immer von der Wetterseite abgewandt ist. Bevorzugt sind die Befestigungsmittel derart ausgebildet, dass die Umfangswand mindestens einen Abstand von 2cm, ganz besonders bevorzugt von mindestens 3cm zur Wand oder einem Baum aufweist, um zu verhindern, dass sich in einem Bereich zwisehen der Außenseite der Umfangswand und der Wand bzw. dem Baum Parasiten aufhalten und überwintern können.

Bevorzugt ist das Material der Umfangwand und/oder des Daches (insbesondere eines Dachelementes und/oder Abdeckschirms) UV-resistent und regenwasserdicht. Gegebenfalls kann auch Holz als Umfangswand und/oder Dachelementmaterial eingesetzt werden, wobei es dann bevorzugt ist, wenn das Holz auf der Außenseite entsprechend wasserabweisend beschichtet, insbesondere lackiert ist mit einem witterungsbeständigen Lack.

Ganz besonders bevorzugt ist eine Ausführungsform des Vogelhauses (Nistkastens), bei dem das für den Vogel zur Verfügung stehende Innenraumvolumen einstellbar bzw. veränderbar ist. Dies wird in Weiterbildung der Erfindung mit Vorteil dadurch erreicht, dass die Brutmulde in unterschiedlichen Höhenabständen entlang der Längsachse L relativ zu dem Dach, insbesondere durch Festlegen an der Umfangswand fixierbar ist. Somit kann insbesondere der Innenraum bei Bedarf verkleinert werden, was für kleinere Vögel von Vorteil ist. Durch die Anpassung des Innenraumvolumens eignet sich der erfindungsgemäße Vogelnistkasten sowohl für größere Vögel, wie Stare, Spechte usw. insbesondere dann, wenn die Brutmulde möglichst weit vom Dach beabstandet ist. Wird die Brutmulde näher am Dach fixiert eignet sich der Vogelnistkasten insbesondere für Meisen, Kleiber, Sperlinge usw.

Eine besonders geschickte und einfache Möglichkeit zur Anordnung der Brutmulde in mindestens zwei entlang der Längsachse L beabstandeten Positionen besteht darin, mindestens zwei entlang der Hochachse beabstandete Lochpaare vorzusehen, wobei jedes Lochpaar von einem Fixier- bzw. Haltestab zum Abstützen der Brutmulde nach unten durchsetzt werden kann. Durch die Wahl eines Lochpaares kann die Fixierhöhe der Brutmulde relativ zum Dach festgelegt werden. Selbstverständlich sind auch zusätzlich oder alternativ andere Möglichkeiten zur Realisierung der Fixierbarkeit der Brutmulde in unterschiedlichen Höhenpositionen denkbar, insbesondere in denen in unterschiedlichen Höhenpositionen Wechselwirkungsmittel zum Zusammenwirken mit Rastmitteln bzw. Rastlaschen vorgesehen sind. Auch ist es beispielsweise denkbar Rastlaschen in unterschiedlichen Höhenpositionen vorsehen.

Als besonders vorteilhaft hat es sich herausgestellt, wenn die Brutmulde mehrteilig ausgebildet ist und einen, vorzugsweise zylindrischen, insbesondere zylinderplattenförmigen Grundkörper umfasst, an dem eine Brutmuldenumfangswand festgelegt ist, dabei ist es besonders bevorzugt, wenn der Grundkörper aus Holz ausgebildet ist, da dies den Vorlieben der Vögel entspricht. Besonders vorteilhaft ist es, die Umfangswand aus einem Naturmaterial, insbesondere einem biegbaren Naturmaterial wie Leder auszubilden, da Leder auch gut geeignet ist um Feuchtigkeit aufzunehmen, und diese natürlich wieder abzugeben. Die Umfangswand kann beispielsweise von außen mit dem Grundkörper verschraubt und/oder verklebt werden. Als besonders vorteilhaft hat es sich herausgestellt, wenn die Brutmulde ein Bodenelement, insbesondere eine Bodenplatte umfasst, sprich einen vorerwähnten Grundkörper an dem die Brutmuldenumfangswand festgelegt ist. Ganz besonders bevorzugt ist es, insbesondere bei der zuvor beschriebenen bevorzugten Ausführungsform eines Grundkörpers aus Holz, auch die Umfangswand aus Holz auszubilden, beispielsweise aus einer Vielzahl von nebeneinander in Umfangsrichtung angeordneten Holzplättchen, die, bevorzugt mit einem jeweiligen unteren Abschnitt außenumfangsseitig am Grundkörper festgelegt, insbesondere verleimt werden. Eine solche Ausführungsform eignet sich insbesondere auch für den Selbstbau, insbesondere bei Bereitstellung eines später noch zu erläuternden, bevorzugten Bausatzes.

Um den erfindungsgemäßen Nistkasten optimal an unterschiedliche Vogelarten anpassen zu können, sind in Weiterbildung der Erfindung Mittel zur Anpassung bzw. Einstellung der freien Querschnittsfläche des Flugloches vorgesehen. Ganz besonders bevorzugt ist es dabei, wenn dem Flugloch eine, insbesondere lösbar am Gehäuse, insbesondere der Umfangswand festlegbare Blende zugeordnet ist, die eine Durchgangsöffnung aufweist, die die freie Querschnittsfläche des Flugloches definiert. Für den Fall, dass die mit dem Flugloch flüchtende Öffnungsfläche gleichgroß ist oder größer ist als die Fluglochquerschnittsfläche, entspricht den Vögeln frei zur Verfügung stehende Querschnittsfläche der des Fluglochs. Die freie Querschnittsfläche kann jedoch auch zur Anpassung an kleinere Vögel reduziert werden, so dass dann die den Vögeln zur Verfügung stehende freie Querschnittsfläche des Flugloches der freien Querschnittsfläche der Blendenöffnung und/oder des Überdeckungsgrades zwischen Blendenöffnung und Fluglochöffnung entspricht. Selbstverständlich ist es auch möglich durch Variation des Überdeckungsgrades einer Blendenöffnung deren freie Querschnittfläche der freien Querschnittsfläche des Fluglochs entspricht oder größer ist als die resultierende, d.h. den Vögeln zur Verfügung stehende Querschnittsfläche zu variieren bzw. einzustellen.

Die Erfindung führt auch auf einen Bausatz zum Herstellen eines erfindungsgemäßen Vogelhauses im Eigen- bzw. Selbstbau, wobei der Bausatz mindestens sämtliche strukturellen Merkmale bzw. Bauelemente des Anspruchs 1 beinhaltet und ggf. zusätzlich von mindestens einem oder mehreren Unteransprüchen. So umfasst der Bausatz mindestens eine Umfangswand, insbesondere ein Rohr, in das ein Flugloch einbringbar oder bereits eingebracht ist sowie ein Dach. Ferner umfasst der Bausatz eine Brutmulde oder Bestandteile bzw. Bauteile zum Herstellen einer Brutmulde, beispielsweise einen zuvor beschriebenen Grundkörper und eine Brutmuldenwand oder Brutmuldenwandteile zur Festlegung am Grundkörper. Die Umfangswand begrenzt eine untere Einführ- und Entnahmeöffnung für die Brutmulde. Ferner umfasst der Bausatz zumindest noch Verriegelungsmittel und/oder Klemmmittel, um die Brutmulde in einer Fixierposition ortsfest relativ zu der Umfangswand zu fixieren. Der Bausatz soll als eigenständige Erfindung offenbart gelten, insbesondere derart, dass dieser in Rahmen neuer und/oder geänderter Patentansprüche beanspruchbar sein soll. Ein solcher Bausatz eignet sich insbesondere auch für handwerklich weniger geschickte Personen und Kinder und kann zudem sehr preisgünstig angeboten werden. Somit trägt der Bausatz für eine optimale Verbreitung des Vogelhauses zum Schutz von gefährdeten Singvögeln bei.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig.1: eine schematische Querschnittsansicht eines nach dem Konzept der Erfindung ausgebildeten Vogelhauses,
- Fig. 2: eine Draufsicht auf eine bevorzugt zum Einsatz kommende Brut- mulde,
- Fig. 3: eine alternative Ausführungsform eines Vogelhauses,
- Fig. 4: eine Darstellung einer alternativen Ausführungsform eines Nistkastens ohne Dachelement, jedoch mit verschwenkbarem Abdeckschirm,
- Fig. 5: eine Detailansicht eines Kippmechanismus zum Verkippen des Abdeckschirms bei einer Ausführungsform gemäß Fig. 4 sowie einer Befestigungsanordnung zum lösbaren Fixieren einer Fluglochblende,
- Fig. 6: eine mögliche Ausführungsform einer Fluglochblende.
- Fig. 7: eine alternative Ausführungsform einer mehrteiligen Brutmulde, und
- Fig. 8 - 17: unterschiedliche, teilweise Detaildarstellungen einer bevorzugten Ausführungsform eines erfindungsgemäßen Vogelhauses.

In den Figuren sind gleiche Elemente und Elemente mit der gleichen Funktion mit den gleichen Bezugszeichen gekennzeichnet.

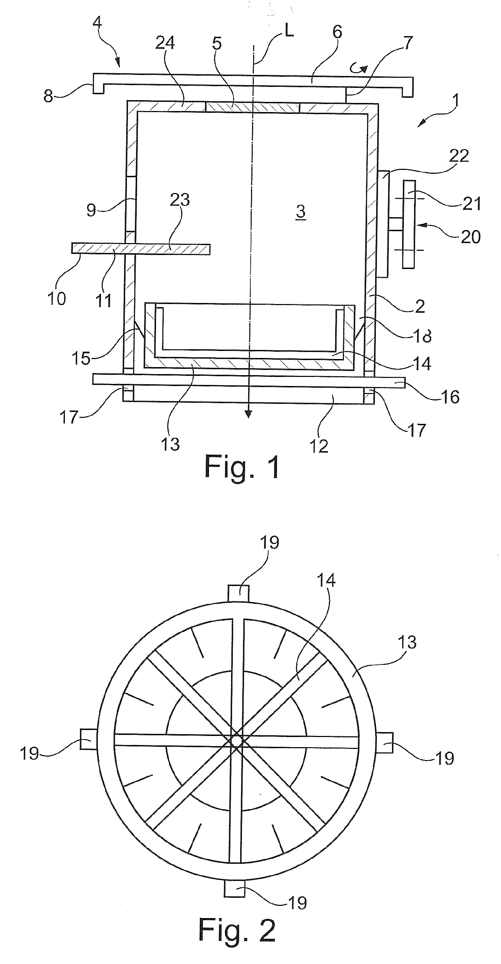

In Fig. 1 ist ein nach dem Konzept der Erfindung ausgebildetes Vogelhaus 1 (Nistkasten) in einer stark schematisierten Darstellung gezeigt. Der Nistkasten umfasst eine kreiszylindrische Umfangswand 2, die radial innen einen Innenraum 3 begrenzt, der nach oben hin mittels eines Dachs 4 regendicht verschlossen ist. In dem gezeigten Ausführungsbeispiel sind ein flächiges Dachelement 24 des Daches 4 und die Umfangswand 2 als einteiliges Bauteil, bevorzugt aus Kunststoff, insbesondere als Kunststoffspritzgussteil ausgebildet.

Das Dachelement 24 des Daches 4 ist teilweise lichtdurchlässig ausgestaltet, durch das Vorsehen einer Sichtscheibe 5 bzw. eines Sichtabschnittes, durch welchen hindurch in den Innenraum 3 Licht einfallen kann.

Zur Regulierung der Lichtzufuhr ist oberhalb des Dachelementes 24 ein einen Bestandteil des Daches 4 bildender Abdeckschirm 6 vorgesehen, der um eine bezogen auf eine vertikale Längsmittelachse des Vogelhauses exzentrisch angeordnete Schwenkachse 7 verschwenkbar und damit relativ zu der Sichtscheibe 5 verstellbar ist. Der Abdeckschirm 6 überragt das Dachelement 24 allseitig in einer Grundstellung in radialer Richtung und weist eine umlaufende Abtropfkante 8 auf zur Gewährleistung eines Abtropfens von Regenwasser mit Radialabstand zur Umfangwand 2.

Durch Verschwenken der Abdeckung 6 kann die Sichtscheibe 5 freigelegt werden, so dass man von außen in den Nistkasten einsehen kann - auch ist die Lichtmenge in Abhängigkeit der Position des Abdeckschirms 6 einstellbar, um das Vogelhaus 1 für unterschiedliche Brüterarten attraktiv gestalten zu können.

Wie erwähnt, verschließt das Dachelement 24 den Innenraum 3 bezogen auf eine Längsachse L in einem oberen Bereich - von dem Dachelement 24 erstreckt sich die umlaufende Umfangswand 2 in Richtung der Längsachse L nach unten. In der Umfangswand 2 befindet sich ein Flugloch 9 für Vögel, dem Flugloch 9 ist ein Stab 10 zugeordnet, der eine Durchgangsöffnung der Umfangswand 2 durchsetzt und somit einen äußeren Aufsitzstab 11 sowie einen inneren Aufsitzstab 23 für Vögel bildet.

Zu erkennen ist, dass entlang der vertikalen Längsachse L beabstandet von dem Dach 4 eine Einführ- und Entnahmeöffnung 12 von der Umfangswand 2 begrenzt ist, durch die hindurch in vertikaler Richtung eine nestförmige bzw. wannenförmige Brutmulde 13 (Brutmuldenteil) von unten her einführbar bzw. nach her entnehmbar ist.

Bevorzugt weist die Brutmulde 13 eine raue Oberfläche auf und/oder wie gezeigt und im Folgenden noch anhand von Fig. 2 erläutert werden wird Fortsätze 14, die nach radial innen in die Brutmulde 13 münden und die ein Verdrehen von Nistmaterial in Umfangsrichtung verhindern.

Die Brutmulde 13 ist mit Hilfe von Verriegelungsmitteln an der Umfangswand 2 in der in den Innenraum 3 eingeführten Position gehalten. Diese Verriegelungsmittel umfassen in dem gezeigten Ausführungsbeispiel mehrere in Umfangsrichtung beabstandete Rastelemente 15, die beispielhaft an der Brutmulde 13 angeordnet sind und die in radialer Richtung nach außen in entsprechende Ausnehmungen in der Umfangswand einfedern, um somit die Brutmulde 3 form- und/oder reibschlüssig an der Umfangswand 2 zu halten. Zusätzlich oder alternativ zu den Rastelementen 15 kann beispielsweise ein Stab 16 vorgesehen werden, der sich quer über die Einführ- und Entnahmeöffnung 12 erstreckt und der zwei einander gegenüberliegende Öffnungen 17 in der Umfangswand durchsetzt. Der Stab 16 verhindert ein Herausfallen der Brutmulde 13 nach unten in Richtung Entnahmerichtung.

Zu erkennen ist, dass der Innenraum 3 außer der Brutmulde 13 nicht durch einen unteren Boden begrenzt ist - vielmehr wird der Innenraum 3 nach unten ausschließlich durch die Brutmulde 13 flächig begrenzt.

Zu erkennen ist ferner, dass radial zwischen der Brutmulde 13 und dem Innenumfang der Umfangswand 2 ein umlaufender Radialspalt 18 gebildet ist, der zum einen dazu dient, Kondensat in direkter Linie vertikal nach unten an der Brutmulde 13 vorbei von dem Vogelhaus 1 wegzuführen und darüber hinaus Platz bietet zum Abfließen von flüssigem Kot. Unterstützt wird diese Wirkung durch eine im Wesentlichen nur punktuelle Auflage bzw. Berührung der Umfangswand durch die Brutmulde 13 an mehreren in Umfangsrichtung beabstandeten Stellen.

Gleichzeitig trägt der Radialspalt 18 für eine ausreichende Durchlüftung Sorge, die den Innenraum 3 im Wesentlichen automatisch klimatisiert. Der Radialspalt 18 ist in vertikaler Richtung parallel zur Längsachse L durchgängig nach unten hin geöffnet und nicht etwa durch einen Boden verschlossen.

In Fig. 2 ist eine schematische Draufsicht auf die Brutmulde 13 gezeigt. Zu erkennen sind insgesamt beispielhaft vier in Umfangsrichtung beabstandete Anlageflächen 19 zur Kontaktierung der Umfangswand 2 zur Minimierung der Wärmeübergangsfläche. Ferner sind zu erkennen mehrere sich in radialer Richtung sowie axial erstreckende Fortsätze 14, die in die eigentliche Mulde hineinragen und ein Verdrehen von Nistmaterial in Umfangsrichtung sicher verhindern.

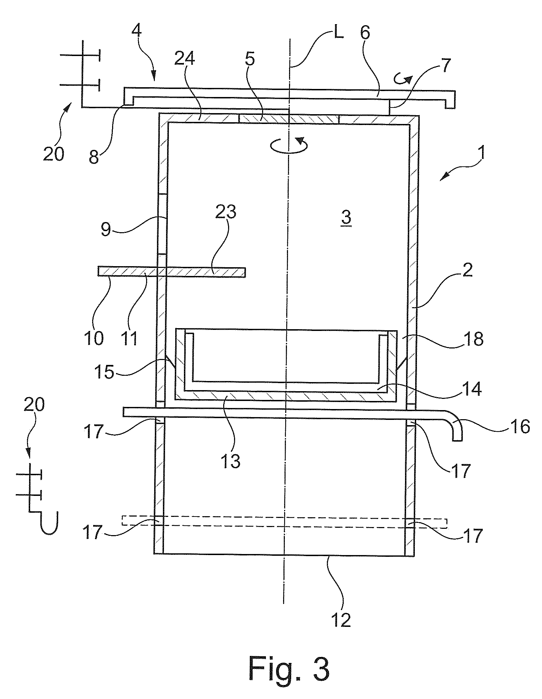

In Fig. 3 ist eine alternative Ausführungsform eines Vogelhauses 1 (Nistkastens) gemäß der Erfindung gezeigt. Zur Vermeidung von Wiederholungen wird im Wesentlichen nur auf die Unterschiede zum Ausführungsbeispiel gemäß den vorstehenden Figuren eingegangen. Im Hinblick auf die Gemeinsamkeiten wird auf vorstehende Figur mit zugehöriger Figurenbeschreibung verwiesen.

Im Unterschied zu dem vorstehenden Ausführungsbeispiel sind die Verriegelungsmittel vorliegend derart ausgebildet, dass das Volumen des Innenraums 3 veränderlich ist, in dem nämlich die Brutmulde 13 in unterschiedlichen Höhenabständen entlang der Längsachse L relativ zu dem Dach 4 am Vogelhaus 1, hier der Umfangswand 2 festlegbar ist. Zu diesem Zweck sind zwei Paare von Öffnungen 17 in der Umfangswand 2 mit Höhenabstand zueinander angeordnet, um hier nach gewünschter Montage bzw. Fixierhöhe der Brutmulde 13 in das obere oder untere Lochpaar einen Stab 16 einführen zu können. Bevorzugt ist der Stab 16 endseitig gekrümmt, um ein vollständiges Durchschieben bzw. unbeabsichtigtes Lösen zu verhindern.

Etwas anders ausgeführt als bei dem vorstehenden Ausführungsbeispiel sind hier die Befestigungsmittel 20. Zu erkennen ist, dass die Befestigungsmittel 20 ein oberes und ein unteres Befestigungsteil aufweisen, wobei ggf. auf das untere Befestigungsteil verzichtet werden kann. Das obere Befestigungsteil umfasst ein Fixierelement, welches an einer Wand einen Baum oder einem Pfahl beispielsweise mit Hilfe von angedeuteten Schrauben fixierbar ist. Relativ zu diesem Fixierelement ist das Vogelhaus 1 um die Längsachse L rotierbar, um somit das Vogelhaus bzw. die Öffnung, das Flugloch 9 relativ zur Wetterseite positionieren zu können. In der jeweils eingestellten Position kann das Vogelhaus 1 dann über das untere Befestigungsteil zusätzlich gestützt werden, wobei hierzu das Vogelhaus in der gewünschten Rotationsposition in das untere laschenartige Fixierelement einhängbar ist.

Aus Fig. 1 sind Befestigungsmittel 20 zu erkennen, um das Vogelhaus 1 an einer zumindest näherungsweise vertikalen Befestigungsanordnung, beispielsweise einer Wand, einem Stamm oder einem Pfosten zu fixieren. Die Befestigungsmittel 20 sind zweiteilig ausgebildet und umfassen ein ortsfest an der Befestigungsanordnung zu fixierendes Befestigungsteil 21 sowie ein relativ dazu verdrehbares Halteteil 22, welches fest mit der Umfangswand 2 verbunden ist.

Alternativ ist es denkbar, anstatt einer verschwenkbaren Anordnung mehrere Einhakpunkte in Umfangsrichtung um die Umfangswand 2 versetzt anzuordnen, um das Vogelhaus 1 in unterschiedlichen Rotationspositionen um die Längsachse L an dem Befestigungsteil 21 fixieren zu können.

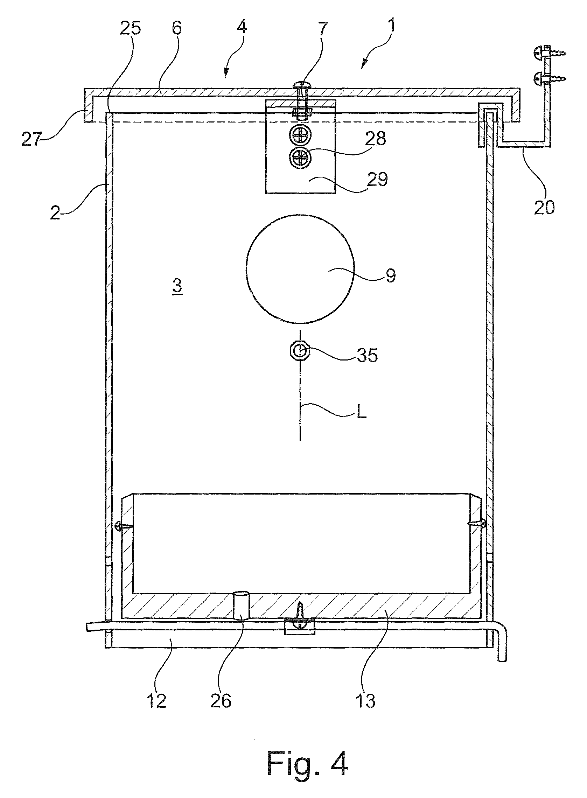

Im Folgenden wird eine alternative Ausführungsform eines Vogelhauses (Nistkasten) anhand der Figuren 4 bis 6 erläutert, wobei zur Vermeidung von Wiederholungen im Wesentlichen nur auf die Unterschiede zu den voranstehenden Ausführungsbeispielen eingegangen wird.

Im Hinblick auf die Gemeinsamkeiten wird auf die voranstehende Figurenbeschreibung nebst Figuren verwiesen.

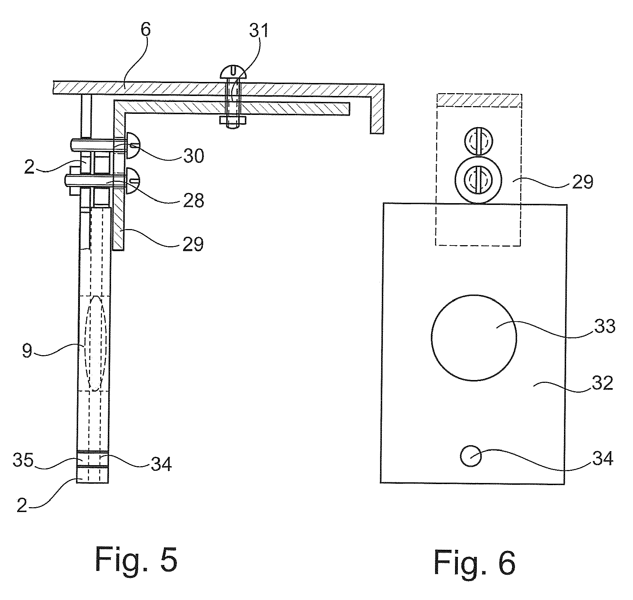

Das Vogelhaus 1 (Nistkasten) gemäß Fig. 4 weist kein zusätzlich zu dem verstellbaren Abdeckschirm 6 des Daches 4 vorgesehenes Dachelement 24 auf, d.h. der Abdeckschirm 6 verschließt den Innenraum 3 unmittelbar regendicht nach oben. Zu erkennen ist, dass der Abdeckschirm 6 mit Axialabstand zu einem oberen Umfangswandrand 25 der Umfangwand 2 angeordnet ist und einen nach unten abkragenden Umfangsrand 27 aufweist, der axial soweit nach unten ragt, dass er die Umfangswand 2 mit Radialspiel in axialer Richtung überlappt. Um auch bei einer solchen Konfiguration ein Verschwenken des Abdeckschirms 6 um seine Rotationsachse 7 (Schwenkachse) zu ermöglichen, ist der Abdeckschirm 6 um eine Kippachse 28 verkippbar, die, wie sich insbesondere aus Fig. 5 ergibt, rechtwinklig zur Längsachse L des Vogelhauses 1 orientiert ist. Nach Verschwenken um die Kippachse 28 gelangt der Umfangsrand 27 aus einer Kollisionsebene mit dem oberen Umfangwandrand 25 heraus und der Abdeckschirm 6 kann verschwenkt werden, um unmittelbar von oben durch die sich dann ergebende freie Öffnung des Innenraums hineinsehen zu können. Alternativ zu einer Kippachse 28 kann auch eine Axialverstellbarkeit des Abdeckschirms 6 entlang der Längsachse L realisiert werden, beispielsweise durch das Vorsehen eines Langlochs, durch welches hindurch der Abdeckschirm bzw. eine Haltelasche 29 an der Umfangswand 2 festgelegt ist.

Um ein ungewolltes Verkippen um die Kippachse 28 zu verhindern, ist der Abdeckschirm 6 über eine Sicherungsschraube 30 in seiner in Fig. 4 gezeigten Grundstellung gesichert, wobei die Sicherungsschraube 30 sowohl die Haltelasche 29 als auch eine Öffnung in der Umfangswand 2 durchsetzt.

Nach Entfernen der Sicherungsschraube 30, die alternativ auch als Sicherungsstift oder dgl. Sicherungselement realisiert werden kann, ist ein Verkippen um die Kippachse 28 möglich.

In Fig. 4 ist eine weitere Besonderheit einer bevorzugten Brutmulde 13 gezeigt. Diese umfasst einen Ablaufkanal 26 um den Ablauf von etwaigem, sich innerhalb der Brutmulde 13 bildenden Kondensat nach unten durch die freie Einführ- und Entnahmeöffnung 12 zu ermöglichen. Ebenso ist in Fig. 4 eine einfachere Befestigungsmöglichkeit zum Fixieren des Vogelhauses 1 (Nistkasten) gezeigt. Bei der bevorzugten Ausführungsform weisen die hierzu vorgesehenen Befestigungsmittel 20 ein oberes Halteteil auf, welches die Umfangswand, genauer den oberen Umfangwandrand 25 umgreift. Durch das Vorsehen zweier solcher Halteteile (eines oben, eines unten) kann eine einfache Fixierung mit Abstand zum Trägerobjekt realisiert werden und eine Ausrichtung des Fluglochs 9 ist immer noch möglich.

Wie sich aus Fig. 5 ergibt ist die Haltelasche 29 in dem gezeigten Ausführungsbeispiel im Querschnitt L-förmig ausgebildet und über eine Fixierverschraubung 31 fest mit dem Abdeckschirm 6 verbunden.

Zur Einstellung der effektiven Fläche des Fluglochs 9 ist eine, insbesondere in Fig. 6 gezeigte Blende 32 vorgesehen mit einer Blendenöffnung 33, die die effektive, d.h. freie Querschnittsfläche des Fluglochs 9 für Flügel definiert. Die Blende 32 ist lösbar von außen (alternativ von innen - nicht gezeigt) im Bereich der Umfangswand 2 festlegbar, wobei lediglich beispielhaft die Blende 32 in einem oberen Bereich von der zuvor diskutierten Haltelasche 29 gehalten ist und in einem unteren Bereich eine Fixieröffnung 34 aufweist, durch die hindurch die Blende 32 mit einer Schraube oder dgl. Fixierelement an der Umfangswand 2 festlegbar ist. Hierzu weist die Umfangswand 2 bevorzugt ebenfalls eine Fixieröffnung 35 auf, die im montierten Zustand der Blende 32 mit der Fixieröffnung 34 der Blende 32 fluchtet.

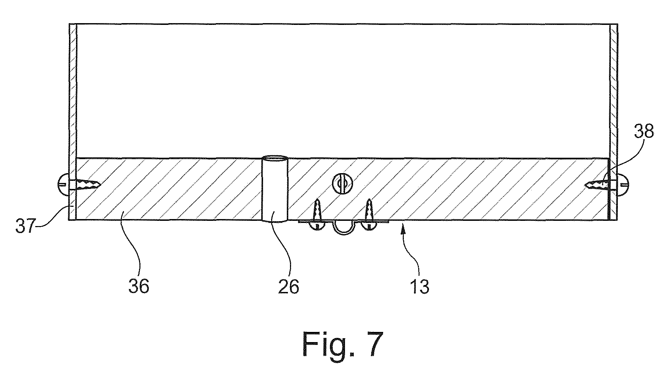

In Fig. 7 ist eine besonders bevorzugte Ausgestaltungsform einer Brutmulde 13 gezeigt. Diese umfasst einen hier beispielsweise aus Holz ausgebildeten Grundkörper 36, der kreiszylinderscheibenförmig ausgestaltet ist. An den Grundkörper 36 ist von außen eine Brutmuldenumfangswand 37 aus Leder festgelegt, hier mit Hilfe von über den Umfang verteilt angeordneten Schrauben. Die Brutmuldenumfangswand 37 erstreckt sich in axialer Richtung über den Grundkörper 36 hinaus, welcher den Boden der bevorzugten Brutmulde bildet.

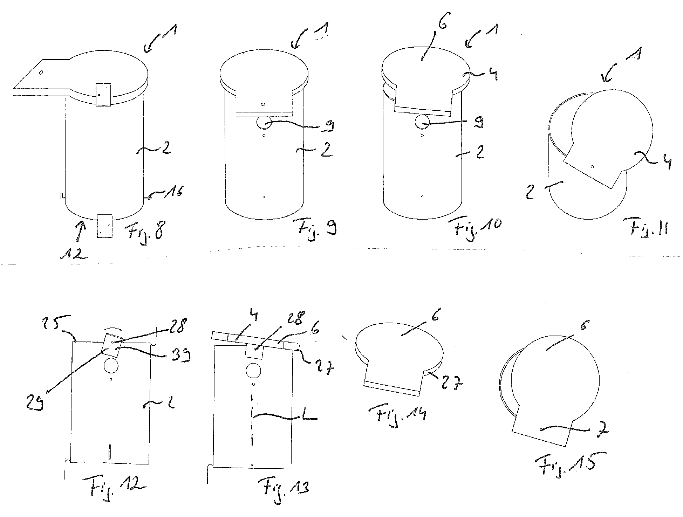

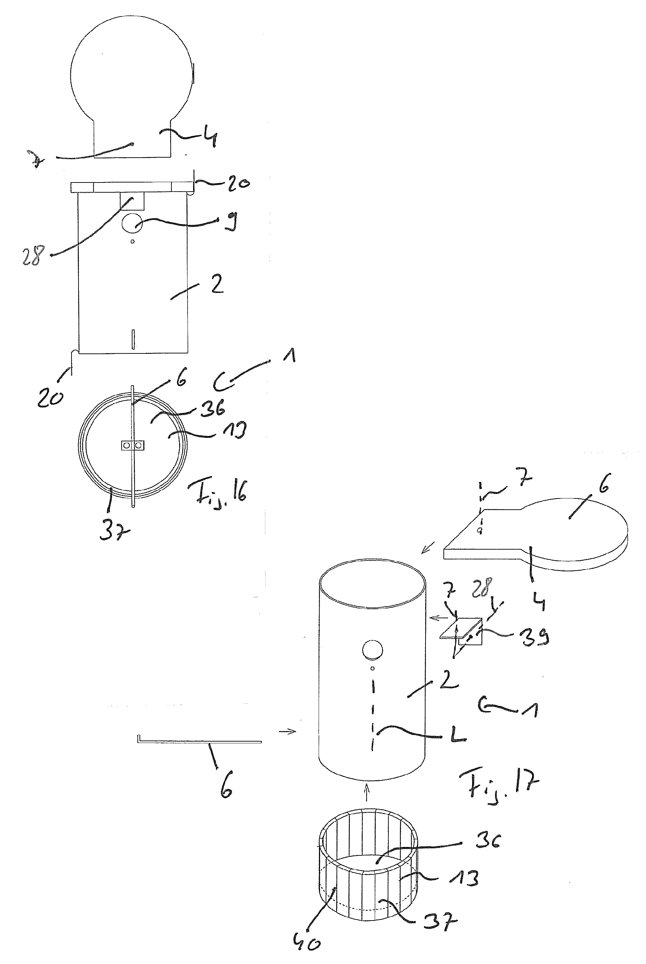

In den Fig. 8 bis 17 ist eine bevorzugte Ausführungsform eines erfindungsgemäßen Vogelhauses 1 aus unterschiedlichen Ansichten gezeigt. Zu erkennen ist die von einem Rohr, beispielsweise aus Kunststoff gebildete Umfangswand 2 mit dem Flugloch 9. Die Umfangswand 2 begrenzt eine untere Einführ- und Entnahmeöffnung 12 für die in Fig. 17 nicht gezeigte Brutmulde, die mittels eines Stabes 16 fixierbar ist. Der Stab 16 durchsetzt dabei zwei einander gegenüberliegende, seitliche Durchgangsöffnungen in der Umfangswand 2. Die Brutmulde 13 bildet den unteren bzw. untersten Boden des Vogelhauses 1, der sich senkrecht zur Hocherstreckung des Vogelhauses erstreckt. Zu erkennen ist auch ein Dach 4, hierin welches die Form eines Abdeckschirms 6, eine von der Umfangswand 2 begrenzten oberen Öffnung verschließt, d. h. vollständig überdeckt. Das Dach 4 ist über ein in den Fig. 12 und 13 gezeigtes Winkelelement 39 an der Umfangswand 2 fixiert. Das Winkelelement 39 (Haltelasche 29) ist an der Umfangswand 2 festgelegt (vgl. Fig. 12 und 13), welches um eine Kippachse 28 verschwenkbar ist. Die Kippachse 28 wird bevorzugt gebildet von einer Befestigungsschraube zur Fixierung des Winkelelementes 39 (Haltelasche 29) an der Umfangswand 2. Nach dem in den Fig. 12 und 13 angedeuteten Verkippen um die Kippachse 28 steht das Dach schräg, d. h. ist nicht mehr horizontal bzw. senkrecht zur Längsachse L ausgerichtet und kann dann, da der Umfangsrand 27 (Kragen) des Daches 4, genauer des Abdeckschirms 6 des Daches aus einem Kollisionsbereich mit dem oberen Umfangswandrand 25 herausgelangt, verschwenkt werden, und zwar um seine Rotationsachse 7 (Schwenkachse), die bevorzugt gebildet wird von einer Befestigungsschraube zum Fixieren des Abdeckschirms 6 bzw. des Daches 4 am Winkelelement 39, was in Fig. 11 angedeutet ist, um somit die obere Öffnung freizugeben, um in den Innenraum einsehen und/oder eingreifen zu können.

In den Fig. 16 und 17 sind nochmals wesentliche Bestandteile eines Vogelhauses 1, insbesondere zur Ausbildung eines Bausatzes gezeigt. Dieser umfasst die von einem Rohr gebildete Umfangswand, ein Dach 4, hier in Form eines Abdeckschirms 6, der über ein Winkelelement 39 an der Umfangswand festlegbar ist. Über das Winkelelement 39 werden eine Kippachse 28 (vgl. vorstehende Ausführungen) definiert, um die das Winkelelement mit Dach 4 relativ zu der Umfangswand verschwenkbar ist, wobei diese Kippachse senkrecht verläuft zur Hoch- bzw. Längserstreckungsrichtung L des Vogelhauses 1 bzw. des Rohres. Ferner definiert das Winkelelement 39 eine Schwenk- bzw. Rotationsachse 7, die bei verschlossener oberer Öffnung parallel zur Längsachse L verläuft und die durch Verkippen um die Kippachse 28 verschwenkt wird, um daraufhin ein Verschwenken des Daches 4 um diese Schwenkachse 7 zu ermöglichen.

Ferner umfasst der Bausatz den Stab 6 und/oder alternativ Verriegelungsmittel und/oder Klemmmittel zum lösbaren Fixieren der ebenfalls gezeigten und vom Bausatz umfassten Brutmulde, die von unten einführbar und nach unten entnehmbar ist. In Fig. 17 ist eine bevorzugte Ausführungsform der Brutmulde 13 gezeigt. Diese umfasst einen beispielhaft und bevorzugt aus Holz ausgebildeten, hier im Wesentlichen zylinderscheibenförmigen Grundkörper 36, an dem eine Brutmuldenumfangswand 37 festgelegt ist. Diese besteht in dem gezeigten Ausführungsbeispiel aus einer Vielzahl von in Umfangsrichtung nebeneinander angeordneten und aneinander angrenzenden Holzblättchen 40, die an den Grundkörper 36, beispielsweise durch Verleimen festgelegt sind. Zu erkennen ist, dass in dem Rohr bzw. in der Umfangswand zeigt das Flugloch 9 eingebracht ist.

In Fig. 16 sind insbesondere die verschwenkbaren Befestigungsmittel 20 zu erkennen, umfassend eine obere und eine untere Befestigungslasche, wobei zumindest eine der Laschen beweglich angeordnet ist, um das Vogelhaus bzw. die Umfangswand mit Dach in Umfangsrichtung um die Längsachse ausrichten zu können.

### Bezugszeichen

- 1: Vogelhaus
- 2: Umfangswand
- 3: Innenraum
- 4: Dach
- 5: Sichtscheibe
- 6: Abdeckschirm
- 7: Schwenkachse
- 8: Abtropfkante
- 9: Flugloch
- 10: Stab
- 11: äußerer Aufsitzstab
- 12: Einführ- und Entnahmeöffnung
- 13: Brutmulde
- 14: Fortsätze
- 15: Rastelemente
- 16: Stab
- 17: Öffnungen
- 18: Radialspalt (Umfangsspalt)
- 19: Anlageflächen
- 20: Befestigungsmittel
- 21: Befestigungsteil
- 22: Halteteil
- 23: innerer Aufsitzstab
- 24: Dachelement
- 25: oberer Umfangswandrand
- 26: Ablaufkanal
- 27: Umfangsrand
- 28: Kippachse
- 29: Haltelasche
- 30: Sicherungsschraube
- 31: Fixierring
- 32: Blende
- 33: Blendenöffnung
- 34: Fixieröffnung
- 35: Fixieröffnung
- 36: Grundkörper
- 37: Brutmuldenumfangswand
- 38: Schraube
- 39: Winkelelement
- 40: Holzplättchen

- L: Längsachse (insbesondere Längsmittelachse)

## Patentansprüche

1. Vogelhaus (1) mit einer einen Innenraum (3) begrenzenden, vorzugsweise aus einem regenwasserdichten und witterungsbeständigen Material ausgebildeten, Umfangswand (2), mit einem den Innenraum (3) auf einer Oberseite regenwasserdicht verschließenden Dach (4) und mit einem den Innenraum (3) mit der Umgebung verbindenden Flugloch (9) für Vögel, wobei in dem Innenraum (3), zumindest abschnittsweise, eine entnehmbare Brutmulde (13) aufgenommen ist,
**dadurch gekennzeichnet,**
**dass** unterhalb des Daches (4), beabstandet entlang einer, insbesondere vertikalen, Längsachse (L) eine von der Umfangswand (2) begrenzte Einführ- und Entnahmeöffnung (12) für die Brutmulde (13) angeordnet ist, durch die Brutmulde (13) entlang der Längsachse (L) nach unten entnehmbar ist, und dass zwischen einer Verriegelungsstellung und einer Freigabestellung verstellbare Verriegelungsmittel und/oder Klemmmittel vorgesehen sind, um die Brutmulde (13) in einer Fixierposition ortsfest relativ zu der Umfangswand (2) zu fixieren.

2. Vogelhaus nach Anspruch 1,
**dadurch gekennzeichnet,**
**dass** bei zumindest abschnittsweise in dem Innenraum (3) aufgenommener Brutmulde (13) radial zwischen der Brutmulde (13) und der Umfangswand (2) ein, insbesondere um die Brutmulde (13) umlaufender, nach unten offener Lüftungs- und Kondensatablaufspalt angeordnet ist.

3. Vogelhaus nach einem der Ansprüche 1 oder 2,
**dadurch gekennzeichnet,**
**dass** die Brutmulde (13) den einzigen Vogelhausboden bildet.

4. Vogelhaus nach einem der vorhergehenden Ansprüche,
**dadurch gekennzeichnet,**
**dass** das Dach (4) ein zumindest abschnittsweise lichtdurchlässiges, insbesondere durchsichtiges, Dachelement (24) umfasst oder daraus besteht, welches bevorzugt den Innenraum (3) nach oben vollständig verschließt ist.

5. Vogelhaus nach einem der vorhergehenden Ansprüche,
**dadurch gekennzeichnet,**
**dass** das Dach (4) einen verstellbaren, insbesondere rotierbaren, vorzugsweise in einer Grundstellung die Umfangswand (2) in radialer Richtung, bevorzugt allseitig überragenden, Abdeckschirm (6) umfasst oder von diesem gebildet ist, der bevorzugt mindestens einen bis auf Höhe des Fluglochs (9) reichenden Seitenflügel und/oder eine Fluglochabdeckfläche aufweist.

6. Vogelhaus nach Anspruch 5,
**dadurch gekennzeichnet,**
**dass** der Abdeckschirm (6) oberhalb des Dachelementes (24) angeordnet ist, und in der Grundstellung des Dachelementes (24) vollständig abdeckt, oder dass durch Verstellen das Abdeckschirms (6) aus seiner Grundstellung heraus der Innenraum (3) nach oben öffnenbar ist, wobei bevorzugt zwischen Abdeckschirm (6) und einem oberen Umfangsrand (27) kein geschlossenes Dachelement (24), bevorzugt keinerlei Dachelement (24) angeordnet ist.

7. Vogelhaus nach Anspruch 5 oder 6,
**dadurch gekennzeichnet,**
**dass** der Abdeckschirm (6) um eine sich winklig, bevorzugt rechtwinklig zur Längsachse (L) erstreckende Kippachse (28) verkippbar und im verkippten Zustand um eine durch das Verkippen winklig zur Längsachse (L) erstreckende Rotationsachse zum Öffnen des Innenraums (3) nach oben rotierbar ist und/oder dass der Abdeckschirm entlang der Längsachse verstellbar ist und in einer nach oben von der Umfangwand weg verstellten Position um eine Rotationsachse rotierbar ist.

8. Vogelhaus nach einem der vorhergehenden Ansprüche,
**dadurch gekennzeichnet,**
**dass** die Umfangswand (2) mit Abstand zu der Eingangsöffnung zumindest abschnittsweise lichtdurchlässig, insbesondere durchsichtig, oder vollständig lichtdicht ist.

9. Vogelhaus nach einem der vorhergehenden Ansprüche,
**dadurch gekennzeichnet,**
**dass** in dem Innenraum (3) und/oder auf der Außenseite der Umfangswand (2), insbesondere unterhalb des Fluglochs (9), ein Aufsitzstab (11, 23) für Vögel angeordnet ist, insbesondere in Form eines die Umfangswand (2) durchsetzenden Stabes (16).

10. Vogelhaus nach einem der vorhergehenden Ansprüche,
**dadurch gekennzeichnet,**
**dass** die Verriegelungsmittel, insbesondere elastisch federnde Rastelemente (15) umfassen und/oder einen, vorzugsweise durch zwei einander gegenüberliegende Öffnungen (17) in der Umfangswand (2) schiebbaren Verriegelungsstab zum Abstützen der Brutmulde (13) nach unten.

11. Vogelhaus nach einem der vorhergehenden Ansprüche,
**dadurch gekennzeichnet,**
**dass** sich die Brutmulde (13) über eine Mehrpunktauflage an der Umfangswand (2) abstützt, insbesondere ausschließlich an maximal fünf, bevorzugt vier, weiter bevorzugt drei, noch weiter bevorzugt zwei in Umfangsrichtung beabstandeten Stellen, insbesondere über Elastomermaterial-Kontaktflächen.

12. Vogelhaus nach einem der vorhergehenden Ansprüche,
**dadurch gekennzeichnet,**
**dass** das Vogelhaus (1) Befestigungsmittel (20) aufweist und dass die Umfangswand (2) relativ zu den Befestigungsmittel (20) verdrehbar um das Flugloch (9) relativ zur Wetterseite ausrichten zu können.

13. Vogelhaus nach einem der vorhergehenden Ansprüche,
**dadurch gekennzeichnet,**
**dass** die Brutmulde (13) aus Holz ausgebildet ist oder aus Kunststoff, insbesondere als Kunststoffspritzgussteil, vorzugsweise mit mindestens einem, vorzugsweise sich in radialer Richtung ersteckenden, Haltevorsprung zum Verhindern eines Verdrehens von Nistmaterial, und/oder dass die Brutmulde (13) ein, vorzugsweise aus Holz ausgebildeten Grundkörper (36) und eine an dem Grundkörper (36) festgelegte Brutmuldenumfangswand (37), insbesondere aus Leder oder aus mehreren nebeneinander angeordneten Einzelelementen, bevorzugt Holzplättchen, aufweist.

14. Vogelhaus nach einem der vorhergehenden Ansprüche,
**dadurch gekennzeichnet,**
**dass** die Verriegelungsmittel und/oder Klemmmittel derart ausgebildet sind, dass die Brutmulde (13) zur Einstellung des Innenraumvolumens in unterschiedlichen Abständen entlang der Längsachse relativ zum Dach (4) fixierbar ist.

15. Vogelhaus nach einem der vorhergehenden Ansprüche,
**dadurch gekennzeichnet,**
**dass** das Vogelhaus Mittel zum Verkleinern einer freien Durchgangsfläche des Fluglochs (9) aufweist, insbesondere in Form einer austauschbaren und lösbar im Bereich der Umfangswand (2) anordnenbaren Blende (32).
